# EUROPEAN PATENT APPLICATION

(11) **EP 2 923 585 A1**
(43) Date of publication of application: **30.09.2015**
(21) Application number: 15157121.3
(22) Date of filing: 02.03.2015
(51) Int. Cl.: A23N 5/00, A47J 43/26

(54) **A METHOD FOR SEPARATING WALNUT SHELL FROM THE WALNUT MEAT AND AN APPARATUS FOR THE SAME**

(30) Priority: 26.03.2014 TR 201403505
(71) Applicant: Kronik Elektrik Elektronik Ve Bilgisayar Sistemleri Sanayi Ticaret Limited Sirketi, 34775 Yukari Dudullu Istanbul (TR)
(72) Inventor: Ak, Halil, 34775 Istanbul (TR)
(74) Representative: Carpintero Lopez, Francisco

(57) **Abstract**

The invention relates to a method to allow the separation of a walnut shell (2) from the walnut meat (20), wherein said method comprises the process of supplying gas into the walnut shell (2) through the opening (3) connecting the walnut (1) to the tree branch. The invention further relates to an apparatus comprising a housing (6) in which a walnut (1) is placed and a gas blowing opening (11) which can supply gas into the walnut shell (2) through the opening (3) connecting the walnut (1) to the tree branch.

## Description

### Technical Field

The present invention relates to a method to separate walnut shell from the walnut meat by means of a compressed gas and to an apparatus for performing this method.

### Background of the Invention

A walnut consists of a structurally hard shell and the meat covered by a membrane therein. Outer geometry of the walnut meat has a complex wavy surface and the inner surface of the shell has also a wavy surface form in accordance with the outer surface of the walnut meat. Besides, walnut shell has also an opening for the walnut to be connected to the tree branch so that the walnut can be nourished from the tree.

Allowing the separation of walnut shell from the walnut meat without giving damage thereto is important in terms of extending the shell life of the walnut meat. Thus, if the membrane covering the meat of the walnut is torn or damaged during the shell separation process, the meat starts to contact with the air and this, in turn, spoils the walnut meat in a relatively short time.

Various suggestions have been made for the separation of walnut shell from the walnut meat. In US 2248367, an apparatus is disclosed which comprises a perforating end moving up-down and by means of which the shell is separated from the walnut meat with the gas blown through said perforating end. In particular, US 2248367 discloses that at a first stage, the walnut is placed into a slot randomly and the pointed end is moved toward the walnut, then it perforates the walnut shell and opens a hole thereon; and then air is blown into the walnut through the hole, thereby the walnut is released from the shell. The arrangement in US 2248367 has several drawbacks, such as: Typically, the space between the inner surface of the walnut shell and the outer surface of the walnut meat is quite small and has an uneven structure. Hence, adjusting the pointed end -without damaging the walnut meat- to enter into the shell is exceptionally difficult and it is not possible to achieve this without damaging the walnut meat with the arrangement offered in US 2248367.

As disclosed by US 2806501, US 2248365, other arrangements known in the art are mainly based on separating the shell of the walnuts by a cracker externally. However, these applications are still far away from allowing the separation of the shell from the walnut meat without giving damage thereto.

### BRIEF DESCRIPTION OF THE INVENTION

The object of the invention is to allow efficient separation of walnut shell from the walnut meat.

In accordance with the object, the invention is a method to allow the separation of walnut shell from the walnut meat, wherein it comprises the process of supplying gas into the walnut shell through the opening connecting the walnut to the tree branch. The gas is preferably air.

According to a preferred arrangement of the invention, the gas supplied through the walnut opening is applied around the walnut opening.

In another aspect, the invention is an apparatus to allow the separation of walnut shell from the walnut meat, wherein it comprises a housing in which walnut is placed and a gas blowing opening which can supply gas into the walnut shell through the opening connecting the walnut to the tree branch.

### DESCRIPTION OF FIGURES

Figure 1 is a representative view of the half of the walnut shell with its walnut meat therein.
Figure 2 is the side view of the apparatus according to the invention for separating walnut shell from the walnut meat.
Figure 3 is the front view of the hand tool according to the invention for separating walnut shell from the walnut meat.
Figure 4 is the upper view of the apparatus according to the invention for separating walnut shell from the walnut meat, in a multi-structure form.

### DETAILED DESCRIPTION OF INVENTION

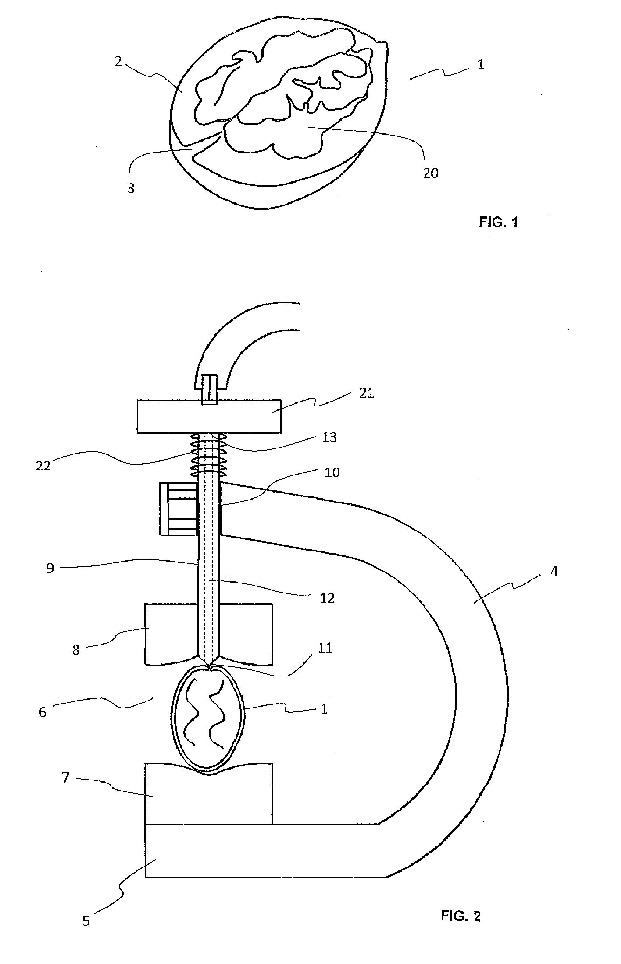

As seen in Figure 1, walnut (1) consists of a walnut meat (20) covered by a hard shell (2) externally. The walnut (1) comprises an opening (3) connecting the one end thereof to the walnut tree branch. Each walnut (1) has intrinsically an opening (3) as such in order for the walnut meat (20) to be nourished from the tree.

In Figure 2, a walnut shell separation apparatus illustrated representatively according to the invention is given. The apparatus comprises a main frame (4) having preferably a half-moon shape and a bottom frame (5) supporting said main frame from the bottom to stand in a stable manner on the ground. A housing lower part (7) is rigidly placed on the bottom frame (5). Upper part of the housing lower part (7) has a hemispherical shape suitable for the spherical shape of the walnut shell. A housing upper part (8) is disposed which is positioned on the upper part of the housing lower part (7) in a manner to have a distance to said upper part. The housing upper part (8) is capable of linearly moving up-down by means of a piston (9). The piston (9) passes through the housing upper part (8) and is rigidly connected thereto. In this manner, a housing (6) is defined by the housing lower part (7) and the housing upper part (8).

Lower part of the housing upper part (8) has a hemispherical shape suitable for the spherical shape of the walnut shell. As housing upper part (8) is connected to the piston (9) from the upper part thereof, when the piston (9) is moved upward, the housing upper part (8) moves away from the housing lower part (7) and thus, walnut (1) the shell of which will be separated is placed into the housing lower part (7) such that the opening (3) thereof will face upward. Subsequently, piston (9) and thus housing upper part are moved downward and until the spherical surface in the lower part of the housing upper part (8) contacts the upper hemisphere of the walnut (1), the piston (9) continues to move downward and then stops. It can be designated in various ways at which amount of displacement the piston (9) will move downward. For instance, the amount of displacement can be a predetermined fixed amount of stroke, as well as it can be determined at which amount of displacement the piston (9) will stop by means of a sensor measuring the reaction force arising from the contact between the housing upper part (8) and the walnut. According to the preferred arrangement of the invention, the piston can be either a pneumatic-operated piston or a mechanical or a low-power hydraulic piston.

Piston (9) is embedded to the main frame (4) in a manner to move linearly by means of a piston bearing (10) formed in the main frame (4) preferably. A support (21) integrated to the piston (9) is disposed in the upper part of the main frame (4) and a spring (22) is placed between said support (21) and the upper part of the main frame. When piston (9) moves downward, spring (22) is clamped between the support (21) and upper part of the main frame (4) and forms a reaction force sufficient for the return movement of the piston (9).

The piston (9) comprises therein a gas channel (12) extending along the piston in a manner to be coaxial therewith. The gas channel (12) extends up to the upper end of the piston (9) and a gas inlet opening (13) is disposed therein. A gas blowing opening (11) is disposed in the lowermost end of the piston (9). Gas can be procured from any gas supplying source such as a compressor and air is preferably used as gas.

To separate walnut shell (2) from the walnut meat (20), walnut (1) is placed into the housing lower part (7) such that walnut opening (3) will face upward. Then, piston (9) is moved downward and after housing upper part (8) is placed onto the upper part of the walnut (1), gas is transferred from gas channel (12), and said gas passes through gas blowing opening (13) and reaches the inside of the walnut (1) through the walnut opening (3), thereby allowing walnut shell to be separated from the walnut meat (20) without giving damage thereto. The separated pieces of walnut shell are completely removed from the walnut meat (20) manually or with suitable cleaning tools.

The transferred gas pressure is applied by looking out for an applicable value depending on the thickness of the walnut shell. For instance, said pressure can be at a value of 1 to 4 atm. It is preferable to apply the gas around the walnut opening (3). Thus, when compressed gas is applied all around the outer surface of the walnut (1), gas passes through the walnut opening (3) and tries to separate the shell (2) from the walnut meat (20), but as the gas pressure will act also from out of the walnut shell, it will be difficult to separate the shell.

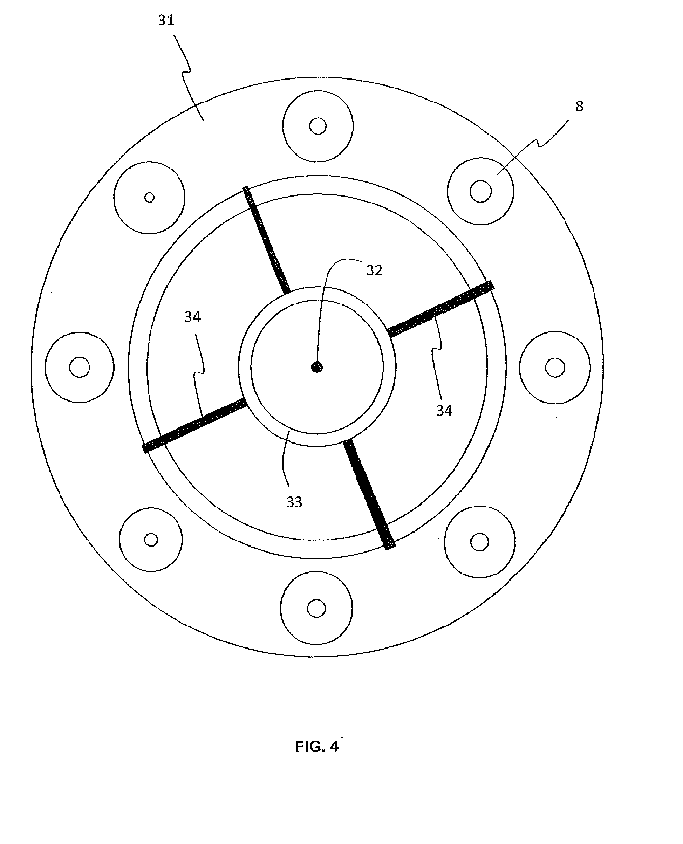

In Figure 4, the upper view of the apparatus described above is given in a multi-structure form. To simplify the structure, only housing upper parts (8) are shown in the figure. Several housings (6) are circularly arranged on a circular housing bearing (31) which can rotate around a housing bearing shaft (32). Housing bearing shaft (32) is embedded with a housing bearing pulley (33) and the housing bearing (31) is connected to the housing bearing pulley (33) by means of the several body supports (34) extending in radial direction. Housing bearing (31) can be rotated by means of a motor (not deemed necessary to be shown in the figure).

Initially, walnuts (1) are placed into each one of the housing (6). Meanwhile, a piston ready to move downward is disposed in the upper part of one of the housings (6). According to this arrangement, piston inlet hole disposed in the housing upper part (8) is sized in such a manner that piston (9) can enter into and exit from said inlet hole easily. During operation, piston (9) moves downward and extends to the walnut opening (3), then gas is supplied therethrough and as mentioned above, walnut shell (2) is separated from the walnut meat (20). Then, piston (9) is lifted upward. For the next operation, housing bearing (31) is rotated at a predetermined amount, namely until piston hole disposed in the housing upper part (8) is fitted to the piston (9), and again piston (9) is moved downward and the preceding operation is repeated, thereby allowing the separation of walnut shell (2) from the walnut meat (20).

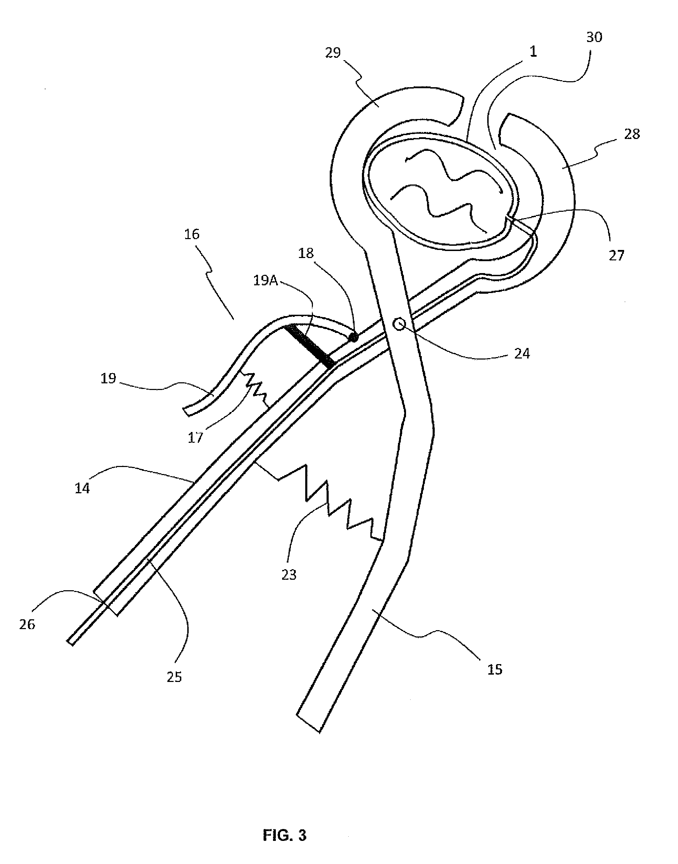

In Figure 3, an alternative embodiment is shown. Accordingly, the apparatus allowing the separation of walnut shell from the walnut meat is formed as a hand tool. Said hand tool comprises a first arm (14) and a second arm (15) connected thereto in a rotatable manner by means of an arm connection pin (24). A curved first arm housing (28) having a half-moon-like shape is disposed in one end of the first arm (14) while a curved second arm housing (29) having a half-moon-like shape is disposed in one end of the second arm (15) in a manner to correspond to the first arm housing (28). An arm housing (30) is defined by the first arm housing (28) and the second arm housing (29). An arm spring (23) which is connected to the corresponding ends of the first arm (14) and the second arm (15) is provided therebetween. As will be described below, arm spring (23) is formed in order to diverge the first arm (14) and the second arm (15) from each other for enabling the first arm housing (28) and the second arm housing (29) to be opened after walnut shell (2) is separated from the walnut meat (20).

A gas supplying pipe (25) is disposed which is connected with the first arm (14) through a gas inlet hole (26) opened at the end of the first arm (14) and extends along the arm. Gas supplying pipe (25) also extends through the first arm housing (28) and forms a small recess into the arm housing (30) from the upper part of the first arm housing (28), namely after arching about 90°. A gas outlet hole (27) is disposed at the end of the gas supplying pipe (25) within the arm housing (30).

A gas valve (16) is provided on the first arm. Said gas valve (16) has a structure to be triggered by hand preferably. Gas valve (16) comprises a valve arm (19) which is connected from the one end thereof to the first arm (14) in a rotatable manner by means of a valve pin (18). Valve arm (19) has a curved shape in a manner to be driven by a finger of the hand. Valve arm (19) comprises a valve piston (19A) one end of which is connected thereto and the other end of which can enter into and exit from a radial hole opened in the gas supplying pipe (25). When valve arm (19) is triggered, valve piston (19A) enters into the gas supplying pipe (25) and reduces the amount of gas transferred to the first arm housing (28). To facilitate the return of valve arm (19) to its initial position (the position where triggering is not performed yet), a valve spring (17) provided between the valve arm (19) and the first arm (14) is disposed.

To allow the separation of walnut shell (2) from the walnut meat (20), walnut (1) is placed into the arm housing (30) when the first arm (14) is detached from the second arm (15). Thusly, in this case, the first arm housing (28) is detached from the arm housing (29). During the placement of walnut, attention is given to enable the walnut opening (3) to correspond to the gas outlet hole (27) disposed in the first arm housing (28). Subsequently, the first and the second arms (14, 15) are approximated to each other by being clamped manually and in this case the first arm housing (28) and second arm housing (29) are closed, thereby walnut (1) is grasped by the arm housing (30).

Then, gas is supplied through the gas supplying pipe (25) and the pressure of said gas is adjusted by means of the gas valve (16) optionally. With the effect of gas pressure, walnut shell (2) is separated from the walnut meat (20). The separated pieces of walnut shell (2) are completely removed from the walnut meat (20) manually or with suitable cleaning tools.

The transferred gas pressure is applied by looking out for a suitable value depending on the thickness of the walnut shell. For instance, said pressure can be at a value of 1 to 4 atm. It is preferable to apply the gas around the walnut opening (3). Thusly, when compressed gas is applied all around the outer surface of the walnut (1), gas passes through the walnut opening (3) and tries to separate the shell (2) from the walnut meat (20), but as the gas pressure will act also from out of the walnut shell, it will be difficult to separate the shell.

In the hand tool according to the invention, that the gas supplying pipe (25) is disposed in the first arm (14) and accordingly that the gas outlet hole (27) is disposed in the first arm housing (28) are completely optional. Thus, that the gas supplying pipe (25) can be disposed in the second arm (15) and accordingly that the gas outlet hole (27) can be disposed in the second arm housing (29) are within the scope of the invention, which should be appreciated.

## Claims

1. A method for separating walnut shell (2) from the walnut meat (20), **characterized by** comprising supplying gas into the walnut shell (2) through the opening (3) connecting the walnut (1) to the tree branch.

2. The method according to Claim 1, **characterized in that** the gas is applied around the walnut opening (3).

3. The method according to Claim 1 or 2, **characterized in that** said gas is air.

4. The method according to Claim 1 or 2, **characterized in that** the applied gas pressure is between 1 to 4 atm.

5. An apparatus for separating walnut shell (2) from the walnut meat (20), **characterized by** comprising a housing (6) for receiving a walnut (1), a gas blowing opening (11) supplying gas from a gas source into the walnut shell (2) through the opening (3) connecting the walnut (1) to the tree branch.

6. The apparatus according to Claim 5, **characterized in that** said housing (6) comprises a housing lower part (7) and a housing upper part (8) positioned on the upper part of the housing lower part (7), such that there being a distance to said upper part and linearly moving up-down in accordance with said housing lower part (7).

7. The apparatus according to Claim 6, **characterized in** comprising a piston (9) providing up-down movement of said housing upper part (8).

8. The apparatus according to Claim 7, **characterized in** comprising a gas channel (12) extending along said piston (9) and gas channel (12) communicating with said gas blowing opening (11).

9. The apparatus according to Claim 7, **characterized by** comprising a main frame (4) supporting said piston (9) for moving up and down; and a bottom frame (5) supporting said main frame (4) from its bottom for standing on the ground, and the said housing lower part (7) being rigidly placed on the bottom frame (5).

10. A hand tool to allow the separation of walnut shell (2) from the walnut meat (20), **characterized by** comprising a first arm (14); a second arm (15) rotatably connected to the first arm (14) an arm connection pin (24); a curved first arm housing (28) disposed in one end of the first arm (14); a curved second arm housing (29) disposed in one end of the second arm (15), the second arm housing (28) corresponding to the first arm housing (28); and a gas supplying pipe (25) extending along one of said arms (14 or 15) to a corresponding arm housing (28 or 29) and supplying gas from a gas source therein.

11. The hand tool according to Claim 10, **characterized in** comprising a gas valve (16) provided on the arm (14 or 15) with which gas supplying pipe (25) is connected.

12. The hand tool according to Claim 11, **characterized in that** gas valve (16) comprises a valve arm (19) which is connected from the one end thereof to the relevant arm (14 or 15) in a rotatable manner by means of a valve pin (18); and a valve piston (19A) one end of which is connected to the valve arm (19) and the other end of which can enter into and exit from a radial hole opened in the gas supplying pipe (25).

13. The hand tool according to Claim 12, **characterized by** comprising a valve spring (17) provided between a corresponding arm (14 or 15) and the valve arm (19).

14. The hand tool according to Claim 10, **characterized by** comprising an arm spring (23) provided between the first arm (14) and the second arm (15) and connected to the corresponding ends thereof.
